# FASCICULE DE BREVET EUROPEEN

(11) **EP 1 659 426 B1**
(45) Date de publication et mention de la délivrance du brevet: **24.10.2007**
(21) Numéro de dépôt: 05292364.6
(22) Date de dépôt: 08.11.2005
(51) Int. Cl.: G02B 5/30

(54) **Dispositif de séparation optique et terminal de communication optique comprenant un tel dispositif**
Optical separation device and optical communications terminal incorporating such a device
Vorrichtung zur optischen Trennung und Endgerät zur optischen Kommunikation, das eine solche Vorrichtung aufweist

(30) Priorité: 18.11.2004 FR 0412259
(43) Date de publication de la demande: 24.05.2006
(73) Titulaire: EADS ASTRIUM SAS, 31402 Toulouse Cedex 4 (FR)
(72) Inventeur: Le Hors, Lénaic Alban, 31200 Toulouse (FR); Benchetrit, Thierry, 31240 L'Union (FR)
(74) Mandataire: Boire, Philippe Maxime Charles

(56) Documents cités:
- JP-A- 2002 107 818
- US-A- 5 694 233
- PATENT ABSTRACTS OF JAPAN vol. 011, no. 264 (P-610), 27 août 1987 (1987-08-27) & JP 62 070738 A (HITACHI ELECTRONICS ENG CO LTD), 1 avril 1987 (1987-04-01)
- PATENT ABSTRACTS OF JAPAN vol. 2003, no. 12, 5 décembre 2003 (2003-12-05) & JP 2004 287203 A (SEIKO EPSON CORP), 14 octobre 2004 (2004-10-14)

## Description

La présente invention concerne un dispositif de séparation optique, ainsi qu'un terminal de communication optique comprenant un tel dispositif de séparation.

Dans diverses applications optiques, des signaux portés par des rayonnements de deux longueurs d'onde distinctes sont transmis selon des directions parallèles et reçus par une ouverture d'entrée commune. Ces signaux doivent ensuite être traités selon deux voies distinctes. Une première voie est agencée pour recevoir le rayonnement associé à l'une des longueurs d'onde, ainsi qu'une partie de l'énergie du rayonnement associé à l'autre longueur d'onde. La seconde voie est agencée pour recevoir la partie complémentaire de l'énergie du rayonnement associé à ladite autre longueur d'onde. Autrement dit, le rayonnement qui possède la première longueur d'onde est uniquement destiné à la première voie, alors que le rayonnement qui possède la seconde longueur d'onde est destiné aux deux voies. En outre, il est souvent nécessaire que la répartition de l'énergie du rayonnement qui possède la seconde longueur d'onde puisse être ajustée entre les deux voies.

La communication optique en champ libre est un exemple d'application qui nécessite une telle répartition de deux rayonnements correspondant à des longueurs d'onde distinctes. Il peut s'agir, par exemple, d'une communication optique entre deux satellites, ou bien entre un satellite et une station terrestre ou aéroportée. De façon connue, les principales phases d'une telle communication sont l'acquisition, la poursuite et la communication. La phase d'acquisition consiste à orienter deux terminaux de communication optique chacun en direction de l'autre. Elle est basée sur la réception par chaque terminal de signaux de balise émis par l'autre terminal à une première longueur d'onde. Chaque terminal reçoit alors des signaux optiques émis par l'autre terminal à une seconde longueur d'onde. Ces signaux transmis à la seconde longueur d'onde permettent d'une part d'affiner la direction de pointage du terminal, et d'autre part de recevoir des données utiles. L'affinement de la direction de pointage constitue la phase de poursuite, et la réception des données correspond à la phase de communication. Les phases de poursuite et de communication sont généralement exécutées simultanément.

Au sein de chaque terminal, les phases d'acquisition et de poursuite sont exécutées en traitant par une première voie tous les signaux optiques reçus, qui ont la première ou la seconde longueur d'onde. La phase de communication est exécutée en traitant les signaux optiques reçus selon la seconde longueur d'onde par une seconde voie, distincte de la première voie.

Jusqu'à présent, la fraction de l'énergie des signaux associés à la seconde longueur d'onde qui est orientée vers la seconde voie, autrement dit vers la voie de communication, est déterminée par une lame semiréfléchissante disposée à l'entrée du terminal. La répartition entre les deux voies de l'énergie des signaux associés à la seconde longueur d'onde est alors fixée lors de la construction du terminal, et ne peut plus être ajustée lors de l'utilisation de celui-ci.

Or, si les signaux reçus sont de faible puissance ou si le terminal n'est pas pointé avec précision en direction de l'autre terminal, par exemple lorsque ce dernier se déplace rapidement, il est avantageux de pouvoir augmenter la fraction de l'énergie des signaux associés à la seconde longueur d'onde qui est orientée vers la voie de communication. Un tel ajustement peut aussi être nécessaire lorsque les conditions de transmission entre les deux terminaux varient ou sont défavorables.

Un but de la présente invention consiste donc à fournir un dispositif optique qui permette d'orienter vers deux voies distinctes des signaux reçus selon deux longueurs d'onde, avec une répartition énergétique pour l'une des longueurs d'onde qui est ajustable.

Pour cela, l'invention propose un dispositif de séparation optique comme spécifié dans la revendication 1.

Ainsi, dans un dispositif selon l'invention, l'énergie de signaux optiques portés par un rayonnement correspondant à la première longueur d'onde est transmise dans une proportion sensiblement fixe entre l'entrée et la première sortie. L'énergie de signaux optiques portés par un rayonnement correspondant à la seconde longueur d'onde est répartie entre les deux sorties, selon une répartition qui est déterminée au moyen du système de variation de polarisation.

Le système de variation de polarisation répartit l'énergie du rayonnement reçu à la seconde longueur d'onde entre deux composantes ayant des directions de polarisation déterminées. Le séparateur de polarisation oriente ensuite chacune des deux composantes vers la première ou la seconde sortie du dispositif, en respectant cette répartition de l'énergie. La polarisation constitue donc un paramètre de partage de l'énergie des signaux reçus à la seconde longueur d'onde, entre les deux sorties du dispositif. Dans le jargon de l'Homme du métier, le dispositif de séparation optique opère un démultiplexage des première et seconde longueurs d'onde, avec une répartition de l'énergie associée à la seconde longueur d'onde qui est ajustable.

Dans le cadre de l'invention, on entend par rayonnement polarisé un rayonnement dont le champ électrique est orienté selon une direction déterminée et constante, ou bien tourne dans un sens déterminé. La polarisation du rayonnement est dite linéaire dans le premier cas, et circulaire dans le second cas.

Le rayonnement correspondant à la seconde longueur d'onde qui est reçu par un dispositif de séparation selon l'invention est polarisé. Cette polarisation peut être obtenue au moyen d'un polariseur linéaire ou circulaire agencé en entrée du dispositif. Alternativement, le rayonnement correspondant à la seconde longueur d'onde peut être transmis directement sous forme polarisée par un émetteur de celui-ci.

Par ailleurs, une lame quart d'onde, dimensionnée pour la seconde longueur d'onde et ajoutée à l'entrée du dispositif, peut permettre de convertir un dispositif conçu pour un rayonnement ayant la seconde longueur d'onde qui est polarisé rectilignement, en un dispositif adapté pour un rayonnement ayant la seconde longueur d'onde qui est polarisé circulairement.

Le rayonnement reçu qui correspond à la première longueur d'onde n'est pas nécessairement polarisé.

Un premier avantage d'un dispositif selon l'invention résulte du fait qu'il ne comporte qu'une seule entrée de signaux optiques. Le nombre de composants optiques du dispositif, son poids et son encombrement sont réduits en conséquence, ce qui est particulièrement important pour un dispositif embarqué à bord d'un satellite, notamment. En outre, plusieurs entrées distinctes nécessiteraient d'assurer un parallélisme entre les directions de pointage de chacune d'elles, ce qui rendrait l'installation et l'utilisation du dispositif compliquées. La mise en oeuvre d'un dispositif selon l'invention est donc particulièrement simple pour cette raison.

Un deuxième avantage d'un dispositif selon l'invention résulte du fait que le nombre de pièces mobiles est faible, voire nul. En effet, seul le système de variation de polarisation est susceptible de comporter des pièces mobiles. Ceci peut être le cas, notamment, lorsque le système de variation de polarisation comprend une lame demi-onde dimensionnée pour la seconde longueur d'onde et orientable autour d'un axe perpendiculaire à ladite lame.

Alternativement, le système de variation de polarisation peut comprendre une cellule de Pockels connectée à une source de tension électrique variable. De façon connue, une telle cellule est un modulateur électro-optique biréfringent, dont la différence entre les indices de réfraction ordinaire et extraordinaire peut être modifiée en appliquant une tension électrique aux bornes du module. Dans ce cas, le dispositif de séparation optique ne comporte aucune pièce mobile. Il est alors particulièrement robuste et fiable. En particulier, son fonctionnement est insensible à d'éventuelles vibrations, frottements ou résistances inertielles.

Le système de variation de polarisation peut être actionné manuellement ou automatiquement. En particulier, il peut être asservi en fonction de la puissance du rayonnement ayant la seconde longueur d'onde qui est transmis à l'une des sorties du dispositif. Pour cela, le dispositif de séparation optique comprend en outre un système d'asservissement du système de variation de polarisation, qui est agencé pour recevoir en entrée un signal représentatif d'une puissance du rayonnement ayant la seconde longueur d'onde et transmis à l'une ou l'autre des sorties du dispositif de séparation.

Selon un premier mode de réalisation de l'invention, le système de variation de polarisation et le séparateur de polarisation sont disposés entre l'entrée et la première sortie du dispositif, de façon à transmettre le rayonnement ayant la première longueur d'onde et émergeant du dispositif par ladite première sortie. Un tel mode de réalisation met en oeuvre un nombre de composants optiques particulièrement restreint.

Selon un second mode de réalisation de l'invention, le dispositif de séparation optique comprend en outre un séparateur de longueur d'onde agencé pour transmettre vers la première sortie du dispositif un rayonnement ayant la première longueur d'onde, et pour transmettre vers un chemin intermédiaire un rayonnement ayant la seconde longueur d'onde. Le système de variation de polarisation et le séparateur de polarisation sont alors disposés sur le chemin intermédiaire en aval du séparateur de longueur d'onde par rapport au sens de propagation du rayonnement. Dans ce cas, le dispositif de séparation optique peut n'être constitué que de composants optiques relativement simples et peu onéreux.

L'invention propose aussi un terminal de communication optique qui comprend un dispositif de séparation tel que décrit précédemment, dans lequel les première et seconde sorties du dispositif sont respectivement connectées optiquement à une voie d'acquisition et de poursuite d'un terminal distant et à une voie de réception de signaux optiques. Un tel terminal bénéficie d'une répartition ajustable de l'énergie des signaux reçus à la seconde longueur d'onde entre la voie d'acquisition et de poursuite d'une part, et la voie de communication d'autre part. Cela permet d'adapter la sensibilité du terminal en fonction des conditions de réception des signaux. En particulier, sa sensibilité peut être modifiée en temps réel pendant le fonctionnement du terminal.

Le terminal peut comprendre en outre un miroir asymétrique disposé à l'entrée du dispositif de séparation, de façon à ce qu'un signal optique transmis par le terminal sorte par ladite entrée.

D'autres particularités et avantages de la présente invention apparaîtront dans la description ci-après d'exemples de réalisation non limitatifs, en référence aux dessins annexés, dans lesquels :
- la figure 1 est un schéma optique d'un dispositif de séparation selon le premier mode de réalisation de l'invention ;
- la figure 2 est un diagramme de transmission d'un séparateur de polarisation pouvant être utilisé dans un dispositif conforme à la figure 1 ;
- la figure 3 est un schéma optique d'un dispositif de séparation selon le second mode de réalisation de l'invention ;
- la figure 4 illustre une variante du second mode de réalisation de l'invention ; et
- la figure 5 est un schéma optique d'un terminal de communication comprenant un dispositif de séparation selon le second mode de réalisation de l'invention.

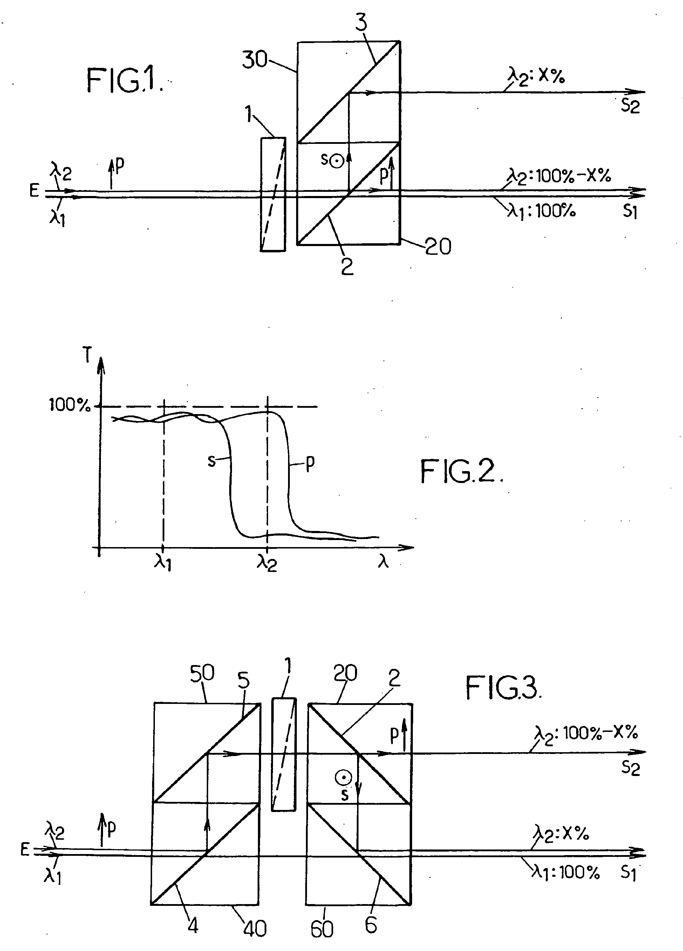

Pour raison de clarté des figures, les dimensions des éléments représentés ne sont pas en proportion avec des dimensions réelles. En outre, des références identiques dans des figures distinctes désignent des éléments identiques, ou qui ont des fonctions identiques. Sur les figures 1, 3 et 5, s et p désignent des directions de polarisation linéaire du rayonnement, qui sont respectivement perpendiculaire et parallèle au plan de ces figures.

Conformément à la figure 1, un dispositif de séparation optique comprend une entrée E et une première sortie S1 de signaux optiques, qui définissent la direction de visée du dispositif. Un système de variation de polarisation 1 et un séparateur de polarisation 2 sont disposés entre l'entrée E et la sortie S1.

Le système de variation de polarisation 1 et le séparateur de polarisation 2 sont sensiblement transparents pour une première longueur d'onde, notée λ₁. On entend par sensiblement transparent la capacité d'un composant optique à transmettre une fraction prépondérante de l'énergie d'un rayonnement. Cette fraction est sensiblement constante pour le système de variation de polarisation 1 et le séparateur de polarisation 2, pour un rayonnement à la longueur d'onde λ₁. Elle est alors notée arbitrairement 100% sur la figure, en relation avec un rayon associé à la longueur d'onde λ₁.

Le système de variation de polarisation 1 peut être constitué d'une lame demi-onde conçue pour introduire un retard d'une demi-période entre deux composantes de polarisation linéaire d'un rayonnement ayant une longueur d'onde λ₂. Un tel effet d'une lame demi-onde est supposé connu et n'est pas repris ici. La lame demi-onde est montée de façon mobile en rotation autour de l'axe du dispositif qui relie l'entrée E à la sortie S1. Elle peut être tournée autour de cet axe par un moteur, de façon à modifier l'orientation de ses axes optiques par rapport au séparateur de polarisation 2.

Le séparateur de polarisation 2 comprend une lame dichroïque polarisante, dont la caractéristique de transmission (T) est reproduite à la figure 2, en fonction de la longueur d'onde λ. Un tel séparateur est destiné à être utilisé selon un angle déterminé d'incidence du rayonnement, par exemple de 45 degrés. Il possède deux caractéristiques de transmission distinctes, respectivement pour les polarisations s et p du rayonnement. Pour la polarisation s, la lame dichroïque polarisante possède une limite supérieure de transparence qui est située entre les longueurs d'onde λ₁ et λ₂. Dans l'exemple considéré, λ₁ est inférieure à λ₂. Pour la polarisation p, la lame dichroïque polarisante possède une limite supérieure de transparence qui est située au delà de la longueur d'onde λ₂. La lame est donc sensiblement transparente pour un rayonnement de longueur d'onde λ₁, ainsi que pour un rayonnement de longueur d'onde λ₂ ayant la polarisation p. Par contre, elle est réfléchissante pour un rayonnement de longueur d'onde λ₂ ayant la polarisation s. Une telle lame dichroïque polarisante est couramment constituée d'un empilement de couches dont la réflexion globale dépend de la longueur d'onde et de la polarisation du rayonnement. Cet empilement est ajusté en fonction des seuils de transparence désirés et de l'angle d'utilisation de la lame.

Un miroir de renvoi 3 (figure 1) est en outre agencé entre le système de séparation de polarisation 2 et la sortie S2, de sorte que des directions d'émergence de rayonnement par les sorties S1 et S2 du dispositif sont parallèles entre elles.

De préférence, la lame dichroïque polarisante du séparateur de polarisation 2 et le miroir de renvoi 3 sont agencés de façon fixe sensiblement parallèlement l'un à l'autre. Le parallélisme entre les directions d'émergence du rayonnement par les sorties S1 et S2 n'est alors pas affecté par une rotation involontaire de l'ensemble comprenant le séparateur de polarisation 2 et le miroir de renvoi 3, dans le plan de la figure 1. Ce parallélisme n'est pas non plus affecté par une translation du même ensemble, selon une direction quelconque. Avantageusement, la lame dichroïque polarisante du séparateur de polarisation 2 et le miroir de renvoi 3 sont agencés au sein de blocs transparents contigus respectifs, référencés 20 et 30. Les blocs 20 et 30 ont des formes telles que les faces d'émergence du rayonnement hors des blocs 20 et 30 sont parallèles à la face d'entrée du rayonnement dans le bloc 20. Les blocs 20 et 30 sont collés l'un à l'autre au moyen d'une colle transparente ou par adhérence moléculaire, de sorte qu'ils sont solidaires. Une telle construction du dispositif de séparation optique garantit que les directions d'émergence des rayonnements aux sorties S1 et S2 restent sensiblement parallèles à la direction d'incidence des rayonnements à l'entrée E, quelque soit la rotation ou le décalage par translation de l'ensemble des blocs 20 et 30.

Le fonctionnement d'un tel dispositif de séparation optique est maintenant décrit.

Du rayonnement de longueur d'onde λ₁ est transmis entre l'entrée E et la sortie S1 sans être affecté significativement.

Le rayonnement de longueur d'onde λ₂ qui est reçu à l'entrée E possède la polarisation initiale p. Dans le cas où il présente une polarisation initiale circulaire, celle-ci est convertie en une polarisation linéaire p par ajout d'une lame quart d'onde à l'entrée E du dispositif, dimensionnée pour la longueur d'onde λ₂. Une telle lame quart d'onde doit être sensiblement transparente pour le rayonnement de longueur d'onde λ₁.

De façon connue, la lame demi-onde 1 fait tourner la direction de polarisation du rayonnement incident de longueur d'onde λ₂ d'un angle égal au double de l'écart angulaire entre la direction de polarisation p et l'axe neutre de la lame demi-onde. Une partie de l'énergie correspondant à la longueur d'onde λ₂ est alors associée à la polarisation s. Elle est notée X% sur la figure 1. La partie complémentaire de l'énergie du rayonnement incident correspondant à la longueur d'onde λ₂, notée 100%-X%, demeure associée à la polarisation p. La partie d'énergie associée à la polarisation s est réfléchie par la lame dichroïque polarisante 2 et par le miroir de renvoi 3 en direction de la sortie S2. Simultanément, la partie d'énergie associée à la polarisation p est transmise directement par la lame dichroïque polarisante 2 en direction de la sortie S1. La répartition de l'énergie incidente correspondant à la longueur d'onde λ₂ entre les deux sorties S1 et S2 (respectivement 100%-X% et X%) peut être variée par rotation de la lame dichroïque polarisante 2.

Un second mode de réalisation d'un dispositif de séparation optique selon l'invention est maintenant décrit en référence à la figure 3. L'entrée E et les sorties S1 et S2 du dispositif sont disposées d'une façon analogue à celle du premier mode de réalisation décrit précédemment.

Un séparateur de longueur d'onde 4 est disposé entre l'entrée E et la sortie S1. Il est transparent pour un rayonnement de longueur d'onde λ₁, et réfléchissant pour un rayonnement de longueur d'onde λ₂. Un tel séparateur de longueur d'onde 4 peut comprendre un miroir sélectif en longueur d'onde, qui possède un seuil de réflexion spectrale situé entre les longueurs d'onde λ₁ et λ₂. Il peut avoir une structure analogue à celle d'une lame dichroïque polarisante telle que décrite plus haut, en adaptant les matériaux et les épaisseurs des couches de l'empilement. Le séparateur 4 réfléchit le rayonnement de longueur d'onde λ₂ vers un chemin optique intermédiaire, séparé spatialement du trajet suivi par le rayonnement de longueur d'onde λ₁.

Un miroir de renvoi 5 est disposé sur ce chemin intermédiaire, entre le séparateur de longueur d'onde 4 et un système de variation de polarisation 1. Il est orienté de façon à diriger le rayonnement ayant la longueur d'onde λ₂ vers le système de variation de polarisation 1.

Avantageusement, le miroir de renvoi 5 comprend un miroir polarisant adapté pour réfléchir sélectivement un rayonnement ayant la longueur d'onde λ₂ et la polarisation p vers le système de variation de polarisation 1. Ainsi, le miroir est transparent pour un rayonnement de polarisation s et de longueur d'onde λ₂, ce qui contribue à éliminer un bruit de rayonnement incident à la longueur d'onde λ₂ qui n'aurait pas la polarisation p.

De la même façon que ce qui a été décrit dans le cadre du premier mode de réalisation de l'invention, il est avantageux que le miroir sélectif en longueur d'onde 4 et le miroir de renvoi 5 soient agencés de façon fixe sensiblement parallèlement l'un à l'autre.

Le système de variation de polarisation 1 peut encore être constitué d'une lame demi-onde dimensionnée pour la longueur d'onde λ₂, et mobile en rotation.

Le séparateur de polarisation 2 est disposé sur le chemin intermédiaire après le système de variation de polarisation 1. Il peut comprendre lui-même un miroir polarisant. Il peut notamment être identique au miroir de renvoi 5.

Enfin, un miroir complémentaire 6 est avantageusement disposé de façon à réfléchir le rayonnement transmis vers la sortie S1 par le séparateur de polarisation 2, selon une direction d'émergence par la sortie S1 qui est commune avec le rayonnement transmis par le dispositif ayant la longueur d'onde λ₁. De préférence, le miroir polarisant du séparateur de polarisation 2 et le miroir complémentaire 6 sont agencés de façon fixe sensiblement parallèlement l'un à l'autre.

Le miroir du séparateur de longueur d'onde 4 et le miroir de renvoi 5 peuvent être agencés au sein de premiers blocs transparents contigus respectifs, référencés 40 et 50. Les blocs 40 et 50 ont des formes telles que les faces d'émergence du rayonnement hors de ces premiers blocs sont parallèles à la face d'entrée du rayonnement dans le bloc 40.

De même, le miroir polarisant du séparateur de polarisation 2 et le miroir complémentaire 6 peuvent être agencés au sein de seconds blocs transparents contigus respectifs, référencés 20 et 60. Les blocs 20 et 60 ont des formes telles que les faces d'émergence du rayonnement hors de ces seconds blocs sont parallèles à la face d'entrée du rayonnement dans le bloc 20.

Le fonctionnement d'un dispositif de séparation optique conforme à la figure 3 est le suivant.

Le rayonnement de longueur d'onde λ₁ est encore transmis directement entre l'entrée E et la sortie S1.

Le rayonnement de longueur d'onde λ₂ reçu à l'entrée E est réfléchi par le miroir 4, en direction du miroir de renvoi 5, puis par celui-ci en direction de la lame demi-onde 1.

La lame demi-onde 1 fait alors tourner la direction de polarisation linéaire du rayonnement de longueur d'onde λ₂. Le rayonnement de longueur d'onde λ₂ acquiert ainsi une composante de polarisation s. Cette composante (notée X%) est réfléchie par le miroir polarisant du séparateur de polarisation 2, alors que la composante complémentaire de polarisation p (notée 100%-X%) est transmise vers la sortie S2. Le miroir complémentaire 6 dirige enfin la composante de polarisation s vers la sortie S1. La sortie S1 conduit alors la composante s du rayonnement de longueur d'onde λ₂ ainsi que le rayonnement de longueur d'onde λ₁.

La répartition X% / 100%-X% de l'énergie incidente correspondant à la longueur d'onde λ₂ entre les sorties S1 et S2 peut encore être variée par rotation de la lame demi-onde 1 par rapport au séparateur de polarisation 2.

De la même façon que pour le premier mode de réalisation, une lame quart d'onde peut être ajoutée à l'entrée E du dispositif, pour que celui-ci fonctionne avec un rayonnement de longueur d'onde λ₂ polarisé circulairement.

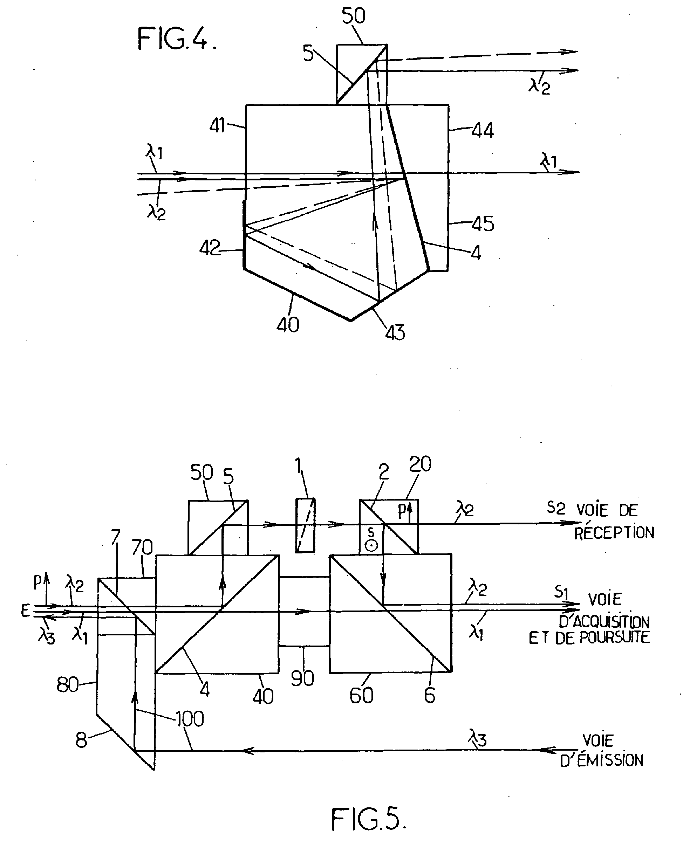

La figure 4 est un exemple d'agencement du miroir du séparateur de longueur d'onde 4 au sein d'un bloc transparent 40 ayant une forme différente. Outre la face qui porte le miroir sélectif en longueur d'onde 4, le bloc 40 comporte une face d'entrée 41 munie d'un traitement antireflet efficace pour les deux rayonnements de longueurs d'onde λ₁ et λ₂. Il comporte en outre deux autres faces 42 et 43 rendues réfléchissantes par métallisation, et orientées de façon à réfléchir le rayonnement de longueur d'onde λ₂ à l'intérieur du bloc 40. Dans l'exemple représenté, la face d'entrée 41 et la face réfléchissante 42 sont dans le prolongement l'une de l'autre. Le bloc transparent 50 du miroir de renvoi 5 est représenté à titre indicatif. Un bloc de compensation 44 est agencé contre la face du bloc 40 qui porte le miroir du séparateur de longueur d'onde 4, afin de procurer une face de sortie 45 du rayonnement de longueur d'onde λ₁ qui est parallèle à la face d'entrée 41. Le trajet indiqué en pointillés correspond à une direction d'incidence décalée angulairement. Comme cela apparaît sur la figure, les directions d'émergence des rayonnements sont décalées en conséquence, mais demeurent parallèles à la direction d'incidence correspondante.

Un avantage d'un agencement tel que représenté à la figure 4 réside dans l'utilisation du miroir séparateur de longueur d'onde 4 avec un angle d'incidence faible, qui peut être inférieur à 45°, notamment. En effet, une valeur faible de l'angle d'incidence du rayonnement sur le miroir 4 peut être plus appropriée dans certaines circonstances.

Des blocs transparents ayant des formes adaptées pour générer des réflexions internes en nombre déterminé sont connus et peuvent être utilisés pour tous les composants optiques réfléchissants ou partiellement réfléchissants mis en oeuvre dans le cadre de l'invention. Ils sont associés entre eux par collage ou par adhérence moléculaire. Deux blocs ainsi associés doivent présenter des indices de réfraction identiques, notamment pour supprimer une perte d'énergie de rayonnement provoquée par une réflexion intervenant à l'interface entre les deux blocs.

La figure 5 illustre un agencement de dispositif de séparation selon le second mode de réalisation, qui est adapté pour un terminal de communication optique. Un chemin supplémentaire 100 est prévu, qui est destiné à l'émission de signaux produits par ledit terminal à la longueur d'onde λ₃. Ce chemin d'émission 100 est raccordé à l'entrée E du dispositif de séparation par deux miroirs 7 et 8. Le miroir 7 est asymétrique : il est conçu pour transmettre tous les signaux reçus en provenance de l'entrée E, et pour réfléchir vers l'entrée E les signaux reçus en provenance du miroir 8. Le miroir 8 peut être un simple miroir de renvoi. Les miroirs 7 et 8 peuvent être agencés au sein de blocs transparents respectifs 70 et 80. La sortie S1 est raccordée optiquement à une voie d'acquisition et de poursuite du terminal, la sortie S2 est raccordée optiquement à une voie de décodage de signaux optiques reçus, et le chemin d'émission 100 est raccordé à une voie de production de signaux optiques de longueur d'onde λ₃ destinés à être émis.

Un bloc transparent intermédiaire 90 est disposé entre les blocs 40 et 60 pour établir une continuité d'indice pour le rayonnement reçu de longueur d'onde λ₁. Les blocs 20-90 sont rigidement couplés les uns aux autres. Un terminal de communication optique équipé d'un tel séparateur est particulièrement compact et robuste, et pratiquement insensible à un défaut de positionnement du séparateur par rotation ou translation de celui-ci.

La lame demi-onde 1 est avantageusement asservie en rotation en fonction du niveau de puissance du rayonnement de longueur d'onde λ₂ qui est transmis à la voie de décodage par la sortie S2. Un tel asservissement contribue à obtenir une communication sûre entre le terminal et un terminal partenaire.

Il est entendu que des nombreuses modifications et adaptations peuvent être apportées aux dispositifs de séparation optique qui ont été décrits en détail, selon l'application à laquelle de tels dispositifs sont destinés. En particulier, la lame demi-onde de chaque dispositif, opérationnelle à la seconde longueur d'onde, peut être remplacée par une cellule de Pockels. Enfin, de tels dispositifs de séparation optiques peuvent être conçus pour fonctionner avec des rayonnements visibles ou infrarouges.

## Revendications

1. Dispositif de séparation optique destiné à recevoir en entrée deux rayonnements respectivement d'une première (λ₁) et d'une seconde (λ₂) longueurs d'onde, le rayonnement de ladite seconde longueur d'onde étant polarisé, le dispositif comprenant :
- une entrée de rayonnement (E) ;
- une première (S1) et une seconde (S2) sorties de rayonnement spatialement séparées ; le dispositif étant, pour le rayonnement ayant la première longueur d'onde (λ₁), sensiblement transparent entre l'entrée (E) et ladite première sortie (S1), et sensiblement opaque entre l'entrée (E) et ladite seconde sortie (S2) ;
- un séparateur de polarisation (2) adapté pour transmettre sélectivement une partie du rayonnement ayant la seconde longueur d'onde (λ₂) vers la première (S1) ou la seconde (S2) sortie en fonction d'une polarisation (s, p) de ladite partie de rayonnement ; et
- un système (1) de variation de la polarisation du rayonnement ayant la seconde longueur d'onde (λ₂), disposé en amont du séparateur de polarisation (2) par rapport au sens de propagation du rayonnement au sein du dispositif de séparation,
ledit dispositif étant adapté pour qu'une répartition énergétique du rayonnement ayant la seconde longueur d'onde (λ₂) soit ajustable entre les première (S1) et seconde (S2) sorties en actionnant le système de variation de la polarisation (1), tout en maintenant une proportion sensiblement fixe du rayonnement ayant la première longueur (λ₁) d'onde qui est transmise entre l'entrée (E) et la première sortie (S1).

2. Dispositif selon la revendication 1, dans lequel le système de variation de polarisation (1) comprend une lame demi-onde dimensionnée pour la seconde longueur d'onde (λ₂) et orientable autour d'un axe perpendiculaire à ladite lame, ou une cellule de Pockels connectée à une source de tension électrique variable.

3. Dispositif selon la revendication 1 ou 2, comprenant en outre un système d'asservissement du système de variation de polarisation (1), agencé pour recevoir en entrée un signal représentatif d'une puissance du rayonnement ayant la seconde longueur d'onde et transmis à l'une ou l'autre des sorties du dispositif de séparation.

4. Dispositif selon l'une quelconque des revendications 1 à 3, comprenant en outre une lame quart d'onde dimensionnée pour la seconde longueur d'onde (λ₂) et disposée à l'entrée du dispositif (E).

5. Dispositif selon l'une quelconque des revendications 1 à 4, dans lequel le système de variation de polarisation (1) et le séparateur de polarisation (2) sont disposés entre l'entrée (E) et la première sortie (S1) du dispositif, de façon à transmettre le rayonnement ayant la première longueur d'onde (λ₁) et émergeant du dispositif par ladite première sortie,
le système de variation de polarisation (1) et le séparateur de polarisation (2) étant tous les deux essentiellement transparents pour le rayonnement ayant la première longueur d'onde (λ₁), d'une façon constante lors d'une variation quelconque de la polarisation du rayonnement ayant la seconde longueur d'onde (λ₂).

6. Dispositif selon la revendication 5, dans lequel le séparateur de polarisation (2) comprend une lame dichroïque polarisante.

7. Dispositif selon la revendication 6, comprenant en outre un miroir de renvoi (3) agencé entre le système de séparation de polarisation (2) et la seconde sortie du dispositif (S2), de sorte que des directions d'émergence de rayonnement par les première (S1) et seconde (S2) sorties du dispositif sont parallèles.

8. Dispositif selon la revendication 7, dans lequel la lame dichroïque polarisante (2) et le miroir de renvoi (3) sont agencés de façon fixe sensiblement parallèlement l'un à l'autre.

9. Dispositif selon la revendication 8, dans lequel la lame dichroïque polarisante (2) et le miroir de renvoi (3) sont agencés au sein de blocs transparents contigus respectifs (20, 30) ayant des formes telles que des faces d'émergence du rayonnement hors desdits blocs (20, 30) sont parallèles à une face d'entrée du rayonnement dans le bloc de la lame dichroïque polarisante (20).

10. Dispositif selon l'une quelconque des revendications 1 à 4, comprenant en outre :
- un séparateur de longueur d'onde (4) agencé pour transmettre vers la première sortie du dispositif (S1) un rayonnement ayant la première longueur d'onde (λ₁), et pour transmettre vers un chemin intermédiaire un rayonnement ayant la seconde longueur d'onde (λ₂), ledit chemin intermédiaire étant séparé spatialement d'un trajet suivi par le rayonnement ayant la première longueur d'onde (λ₁),
le système de variation de polarisation (1) et le séparateur de polarisation (2) étant disposés sur le chemin intermédiaire en aval du séparateur de longueur d'onde (4) par rapport au sens de propagation du rayonnement sur ledit chemin intermédiaire.

11. Dispositif selon la revendication 10, dans lequel le séparateur de longueur d'onde (4) comprend un miroir sélectif en longueur d'onde ayant un seuil de réflexion spectrale situé entre les première (λ₁) et seconde (λ₂) longueurs d'onde.

12. Dispositif selon la revendication 10 ou 11, comprenant en outre un miroir de renvoi (5) disposé sur le chemin intermédiaire entre le séparateur de longueur d'onde (4) et le système de variation de polarisation (1), orienté de façon à diriger le rayonnement ayant la seconde longueur d'onde (λ₂) vers le système de variation de polarisation (1).

13. Dispositif selon la revendication 12, dans lequel le miroir de renvoi (5) comprend un miroir polarisant adapté pour réfléchir sélectivement un rayonnement ayant la seconde longueur d'onde (λ₂) et une polarisation déterminée vers le système de variation de polarisation (1).

14. Dispositif selon la revendication 11 ensemble la revendication 12 ou 13, dans lequel le miroir sélectif en longueur d'onde (4) et le miroir de renvoi (5) sont agencés de façon fixe sensiblement parallèlement l'un à l'autre.

15. Dispositif selon la revendication 14, dans lequel le miroir sélectif en longueur d'onde (4) et le miroir de renvoi (5) sont agencés au sein de premiers blocs transparents contigus respectifs (40, 50) ayant des formes telles que des faces d'émergence du rayonnement hors desdits premiers blocs (40, 50) sont parallèles à une face d'entrée du rayonnement dans le premier bloc du miroir sélectif en longueur d'onde (40)**.**

16. Dispositif selon l'une quelconque des revendications 10 à 15, dans lequel le séparateur de polarisation (2) comprend lui-même un miroir polarisant.

17. Dispositif selon la revendication 16, comprenant en outre un miroir complémentaire (6) disposé de façon à réfléchir le rayonnement transmis vers la première sortie (S1) par le séparateur de polarisation (2), selon une direction d'émergence par ladite première sortie commune avec le rayonnement transmis par le dispositif ayant la première longueur d'onde (λ₁).

18. Dispositif selon la revendication 17, dans lequel le miroir polarisant du séparateur de polarisation (2) et le miroir complémentaire (6) sont agencés de façon fixe sensiblement parallèlement l'un à l'autre.

19. Dispositif selon la revendication 18, dans lequel le miroir polarisant du séparateur de polarisation (2) et le miroir complémentaire (6) sont agencés au sein de seconds blocs transparents contigus respectifs (20, 60) ayant des formes telles que des faces d'émergence du rayonnement hors desdits seconds blocs (20, 60) sont parallèles à une face d'entrée du rayonnement dans le second bloc du miroir polarisant du séparateur de polarisation (20).

20. Terminal de communication optique comprenant un dispositif de séparation selon l'une quelconque des revendications précédentes, dans lequel les première (S1) et seconde (S2) sorties du dispositif sont respectivement connectées optiquement à une voie d'acquisition et de poursuite d'un terminal distant et à une voie de réception de signaux optiques.

21. Terminal selon la revendication 20, comprenant en outre un miroir asymétrique (7) disposé à l'entrée du dispositif de séparation (E), de façon à ce qu'un signal optique transmis par le terminal sorte par ladite entrée.

## Claims

1. Optical splitting device designed to receive, as input, two beams at first (λ₁) and second (λ₂) wavelengths respectively, the beam at said second wavelength being polarized, the device comprising:
- a beam input (E);
- a first beam output (S1) and a second beam output (S2) that are spatially separate, the system being, for the beam having the first wavelength (λ₁), substantially transparent between the input (E) and said first output (S1) and substantially opaque between the input (E) and said second output (S2);
- a polarizing beam splitter (2) designed to selectively transmit part of the beam having the second wavelength (λ₂) to the first output (S1) or the second output (S2) depending on the polarization (s, p) of said beam part; and
- a polarization variation system (1) for varying the polarization of the beam having the second wavelength (λ₂), said system being placed upstream of the polarizing beam splitter (2) relative to the direction of propagation of the beam within the splitting device,
said device being adapted so that an energy distribution of the beam with the second wavelength (λ₂) can be adjusted between the first output (S1) and the second output (S2) by actuating the polarization variation system (1), while maintaining a substantially fixed beam proportion which has the first wavelength (λ₁) and which is transmitted between the the input (E) and the first output (S1).

2. Device according to Claim 1, in which the polarization variation system (1) comprises a half-wave plate dimensioned for the second wavelength (λ₂) and capable to be oriented about an axis perpendicular to said plate, or a Pockels cell connected to a variable electric voltage source.

3. Device according to Claim 1 or 2, which further includes a feedback control system for the polarization variation system (1), arranged to receive, as input, a signal representative of the power of the beam having the second wavelength and transmitted to one or other of the outputs of the splitting device.

4. Device according to any one of Claims 1 to 3, which further includes a quarter-wave plate dimensioned for the second wavelength (λ₂) and placed at the input (E) of the device.

5. Device according to any one of Claims 1 to 4, in which the polarization variation system (1) and the polarizing beam splitter (2) are placed between the input (E) and the first output (S1) of the device so as to transmit the beam having the first wavelength (λ₁) and emerging from the device via said first output, the polarization variation system (1) and the polarizing beam splitter (2) being both substantially transparent for the radiation with the first wavelength (λ₁) , in a constant manner during any variation in the polarization of the beam which has the second wavelength (λ₂).

6. Device according to Claim 5, in which the polarizing beam splitter (2) comprises a dichroic polarizing plate.

7. Device according to Claim 6, which further includes a deflection mirror (3) placed between the polarization splitting system (2) and the second output (S2) of the device, so that the directions in which the beams emerge via the first (S1) and second (S2) outputs of the device are parallel.

8. Device according to Claim 7, in which the dichroic polarizing plate (2) and the deflection mirror (3) are fixedly arranged approximately parallel to each other.

9. Device according to Claim 8, in which the dichroic polarizing plate (2) and the deflection mirror (3) are arranged within respective contiguous transparent blocks (20, 30) having shapes such that exit faces via which the beam emerges from said blocks (20, 30) are parallel to an entrance face where the beam enters the block of the dichroic polarizing plate (20).

10. Device according to any one of Claims 1 to 4, which further includes:
- a wavelength splitter (4) designed to transmit, to the first output (S1) of the device, a beam having the first wavelength (λ₁) and to transmit, along an intermediate path, a beam having the second wavelength (λ₂),
the polarization variation system (1) and the polarizing beam splitter (2) being placed on the intermediate path downstream of the wavelength splitter (4) relative to the direction of propagation of the beam along said intermediate path.

11. Device according to Claim 10, in which the wavelength splitter (4) comprises a wavelength-selective mirror having a spectral reflection threshold located between the first wavelength (λ₁) and the second wavelength (λ₂).

12. Device according to Claim 10 or 11, which further includes a deflection mirror (5) placed in the intermediate path between the wavelength splitter (4) and the polarization variation system (1), oriented so as to direct the beam having the second wavelength (λ₂) towards the polarization variation system (1).

13. Device according to Claim 12, in which the deflection mirror (5) comprises a polarizing mirror designed to selectively reflect a beam having the second wavelength (λ₂) and a specified polarization towards the polarization variation system (1).

14. Device according to Claim 11 together with Claim 12 or 13, in which the wavelength-selective mirror (4) and the deflection mirror (5) are fixedly arranged approximately parallel to each other.

15. Device according to Claim 14, in which the wavelength-selective mirror (4) and the deflection mirror (5) are arranged within first respective contiguous transparent blocks (40, 50) having shapes such that exit faces via which the beam emerges from said first blocks (40, 50) are parallel to an entrance face where the beam enters the first block of the wavelength-selective mirror (40).

16. Device according to any one of Claims 10 to 15, in which the polarizing beam splitter (2) itself comprises a polarizing mirror.

17. Device according to Claim 16, which further includes a complementary mirror (6) placed so as to reflect the transmitted beam towards the first output (S1) via the polarizing beam splitter (2), in an exit direction via said first output common with the beam transmitted by the device having the first wavelength (λ₁).

18. Device according to Claim 17, in which the polarizing mirror of the polarizing beam splitter (2) and the complementary mirror (6) are fixedly arranged approximately parallel to each other.

19. Device according to Claim 18, in which the polarizing mirror of the polarizing beam splitter (2) and the complementary mirror (6) are arranged within second respective contiguous transparent blocks (20, 60) having shapes such that the exit faces via which the beam emerges from said second blocks (20, 60) are parallel to an entrance face where the beam enters the second block of the polarizing mirror of the polarizing beam splitter (20).

20. Optical communication terminal comprising a splitting device according to any one of the preceding claims, in which the first (S1) and second (S2) outputs of the device are optically connected to an optical-signal acquisition/tracking channel of a remote terminal and to an optical-signal receive channel, respectively.

21. Terminal according to Claim 20, which further includes an asymmetric mirror (7) placed at the input (E) of the splitting device so that an optical signal transmitted by the terminal exits via said input.

## Patentansprüche

1. Optische Trennungsvorrichtung, die dazu bestimmt ist, am Einganb zwei Strahlungen mit einer ersten (λ1) bzw. einer zweiten (λ2) Wellenlänge zu empfangen, wobei die Strahlung mit der genannten zweiten Wellenlänge polarisiert ist, wobei die Vorrichtung Folgendes umfasst:
- einen Strahlungseingang (E);
- einen ersten (S1) und einen zweiten (S2) Strahlungsausgang, welche räumlich voneinander getrennt sind; wobei die Vorrichtung, für die Strahlung mit der ersten Wellenlänge (λ1), zwischen dem Eingang (E) und dem genannten ersten Ausgang (S1) weitestgehend transparent ist und zwischen dem Eingang (E) und dem genannten zweiten Ausgang (S2) weitestgehend opak ist;
- einen Polarisationstrenner (2), der dazu ausgestaltet ist, einen Teil der Strahlung mit der zweiten Wellenlänge (λ2), entsprechend einer Polarisation (s, p) des genannten Strahlungsteils, selektiv zum ersten (S1) oder zweiten (S2) Ausgang zu übermitteln; und
- ein System (1) zur Veränderung der Polarisation der Strahlung mit der zweiten Wellenlänge (λ2), welches bezogen auf die Strahlungsrichtung innerhalb der Trennungsvorrichtung vor dem Polarisationstrenner (2) angeordnet ist,
wobei die genannte Vorrichtung so ausgestaltet ist, dass eine Energieverteilung der Strahlung mit der zweiten Wellenlänge (λ2) zwischen dem ersten (S1) und dem zweiten (S2) Ausgang durch Betätigung des Systems zur Veränderung der Polarisation (1) veränderbar ist, wobei die Proportion der Strahlung mit der ersten Wellenlänge (λ1), die zwischen dem Eingang (E) und dem ersten Ausgang (S1) übermittelt wird, weitestgehend gleich gehalten wird.

2. Vorrichtung nach Anspruch 1, bei der das System zur Veränderung der Polarisation (1) ein λ/2-Plättchen, welches für die zweite Wellenlänge (λ2) dimensioniert und um eine zu dem genannten Plättchen senkrechte Achse ausrichtbar ist, oder eine Pockels-Zelle, die an eine Stromquelle mit veränderbarer Spannung angeschlossen ist, umfasst.

3. Vorrichtung nach Anspruch 1 oder 2, umfassend darüber hinaus ein System zur Regelung des Systems zur Veränderung der Polarisation (1), welches ausgebildet ist, um ein Signal zu empfangen, welches für eine Leistung der Strahlung mit der zweiten Wellenlänge, die zum einen oder anderen der Ausgänge der Trennungsvorrichtung übermittelt wird, repräsentativ ist.

4. Vorrichtung nach einem der Ansprüche 1 bis 3, umfassend darüber hinaus ein λ/4-Plättchen, welches für die zweite Wellenlänge (λ2) dimensioniert und am Eingang der Vorrichtung (E) angeordnet ist.

5. Vorrichtung nach einem der Ansprüche 1 bis 4, bei der das System zur Veränderung der Polarisation (1) und der Polarisationstrenner (2) so zwischen dem Eingang (E) und dem ersten Ausgang (S1) der Vorrichtung angeordnet sind, dass die Strahlung mit der ersten Wellenlänge (λ1), welche über den genannten ersten Ausgang aus der Vorrichtung austritt, übermittelt wird,
wobei das System zur Veränderung der Polarisation (1) und der Polarisationstrenner (2) jeweils für die Strahlung mit der ersten Wellenlänge (λ1) im Wesentlichen transparent sind, und zwar in einer konstanten Weise bei einer beliebigen Veränderung der Polarisation der Strahlung mit der zweiten Wellenlänge (λ2).

6. Vorrichtung nach Anspruch 5, bei der der Polarisationstrenner (2) ein dichroitisches polarisierendes Plättchen umfasst.

7. Vorrichtung nach Anspruch 6, umfassend darüber hinaus einen Reflexionsspiegel (3), welcher zwischen dem System zur Trennung der Polarisation (2) und dem zweiten Ausgang der Vorrichtung (S2) dergestalt ausgebildet ist, dass die Strahlungsaustrittsrichtungen aus dem ersten (S1) und dem zweiten (S2) Ausgang der Vorrichtung parallel sind.

8. Vorrichtung nach Anspruch 7, bei der das dichroische polarisierende Plättchen (2) und der Reflexionsspiegel (3) fest und weitestgehend parallel zueinander ausgebildet sind.

9. Vorrichtung nach Anspruch 8, bei der das dichroische polarisierende Plättchen (2) und der Reflexionsspiegel (3) in entsprechenden, nebeneinander liegenden, transparenten Blöcken (20, 30) ausgebildet sind, die solche Formen besitzen, dass Seiten des Strahlungsaustritts aus den genannten Blöcken (20, 30) zu einer Seite des Strahlungseintritts in den Block des dichroischen polarisierenden Plättchens (20) parallel sind.

10. Vorrichtung nach einem der Ansprüche 1 bis 4, umfassend darüber hinaus:
- einen Wellenlängentrenner (4), welcher ausgebildet ist, um eine Strahlung mit der ersten Wellenlänge (λ1) zum ersten Ausgang der Vorrichtung (S1) zu transportieren und um eine Strahlung mit der zweiten Wellenlänge (λ2) zu einem Zwischenweg zu transportieren, wobei der genannte Zwischenweg räumlich von der Strecke der Strahlung mit der ersten Wellenlänge (λ1) getrennt ist,
wobei das System zur Veränderung der Polarisation (1) und der Polarisationstrenner (2) auf dem Zwischenweg bezogen auf die Strahlungsrichtung auf dem genannten Zwischenweg hinter dem Wellenlängentrenner (4) angeordnet sind.

11. Vorrichtung nach Anspruch 10, bei der der Wellenlängentrenner (4) einen wellenlängenselektiven Spiegel mit einer Spektralreflexionsschwelle zwischen der ersten (λ1) und der zweiten (λ2) Wellenlänge umfasst.

12. Vorrichtung nach Anspruch 10 oder 11, umfassend darüber hinaus einen Reflexionsspiegel (5), welcher auf dem Zwischenweg zwischen dem Wellenlängentrenner (4) und dem System zur Veränderung der Polarisation (1) angeordnet ist und so ausgerichtet ist, dass die Strahlung mit der zweiten Wellenlänge (λ2) zum System zur Veränderung der Polarisation (1) gelenkt wird.

13. Vorrichtung nach Anspruch 12, bei der der Reflexionsspiegel (5) einen polarisierenden Spiegel umfasst, welcher angepasst ist, um eine Strahlung mit der zweiten Wellenlänge (λ2) und eine bestimmte Polarisation selektiv zum System zur Veränderung der Polarisation (1) zu reflektieren.

14. Vorrichtung nach Anspruch 11 in Verbindung mit Anspruch 12 oder 13, bei der der wellenlängenselektive Spiegel (4) und der Reflexionsspiegel (5) fest und weitestgehend parallel zueinander ausgebildet sind.

15. Vorrichtung nach Anspruch 14, bei der der wellenlängenselektive Spiegel (4) und der Reflexionsspiegel (5) in entsprechenden, nebeneinander liegenden, transparenten ersten Blöcken (40, 50) ausgebildet sind, die solche Formen besitzen, dass Seiten des Strahlungsaustritts aus den genannten ersten Blöcken (40, 50) zu einer Seite des Strahlungseintritts in den ersten Block des wellenlängenselektiven Spiegels (40) parallel sind.

16. Vorrichtung nach einem der Ansprüche 10 bis 15, bei der der Polarisationstrenner (2) selbst einen polarisierenden Spiegel umfasst.

17. Vorrichtung nach Anspruch 16, umfassend darüber hinaus einen ergänzenden Spiegel (6), welcher dergestalt angeordnet ist, dass die vom Polarisationstrenner (2) zum ersten Ausgang (S1) übermittelte Strahlung, nach einer mit der von der Vorrichtung übermittelten Strahlung mit der ersten Wellenlänge (λ1) gemeinsamen Austrittsrichtung aus dem genannten ersten Ausgang, reflektiert wird.

18. Vorrichtung nach Anspruch 17, bei der der polarisierende Spiegel des Polarisationstrenners (2) und der ergänzende Spiegel (6) fest und weitestgehend parallel zueinander ausgebildet sind.

19. Vorrichtung nach Anspruch 18, bei der der polarisierende Spiegel des Polarisationstrenners (2) und der ergänzende Spiegel (6) in entsprechenden, nebeneinander liegenden, transparenten zweiten Blöcken (20, 60) ausgebildet sind, die solche Formen besitzen, dass Seiten des Strahlungsaustritts aus den genannten zweiten Blöcken (20, 60) zu einer Seite des Strahlungseintritts in den zweiten Block des polarisierenden Spiegels des Polarisationstrenners (20) parallel sind.

20. Optisches Kommunikationsterminal, umfassend eine Trennungsvorrichtung nach einem der vorangehenden Ansprüche, bei dem der erste (S1) und der zweite Ausgang (S2) der Vorrichtung mit einem Erfassungs- und Überwachungsweg eines entfernten Terminals bzw. einem Empfangsweg für optische Signale verbunden sind.

21. Terminal nach Anspruch 20, umfassend darüber hinaus einen asymmetrischen Spiegel (7), welcher am Eingang der Trennungsvorrichtung (E) dergestalt angeordnet ist, dass ein vom Terminal übermitteltes optisches Signal aus dem genannten Eingang austritt.
